# EUROPEAN PATENT SPECIFICATION

(11) **EP 3 214 303 B1**
(45) Date of publication and mention of the grant of the patent: **20.02.2019**
(21) Application number: 17158327.1
(22) Date of filing: 28.02.2017
(51) Int. Cl.: F03D 3/00, F03D 3/06

(54) **ROTOR VERTICAL AXIS WIND TURBINE**
VERTIKALACHSENROTORWINDTURBINE
ÉOLIENNE À AXE VERTICAL À ROTOR

(30) Priority: 01.03.2016 SK 500132016
(43) Date of publication of application: 06.09.2017
(73) Proprietor: Morvova, Marcela, 821 07 Bratislava (SK); Ondrejka, Stanislav, 951 93 Machulince (SK); Hudecova, Angelika, 953 01 Zlate Moravce (SK)
(72) Inventor: Morvová, Marcela, 821 07 Bratislava (SK); Chudoba, Vladimír, 029 01 Námestovo (SK); Stano, Lubomír, 841 05 Bratislava (SK); Zilková, Andera, 962 05 Hrinová (SK); Amena, Michal, 821 07 Bratislava (SK)
(74) Representative: Majlingova, Marta

(56) References cited:
- KR-A- 20130 060 765
- US-A1- 2006 032 361
- US-A1- 2010 104 441

## Description

### Technical field

The invention relates to a wind turbine having a rotor vertical axis.

### Background art

Wind, since present everywhere, has been used by a man since time out of mind. Moreover, the energy is still attractive today, because its use produces no waste, does not pollute air and has no negative effect on human health. Wind as a primary source of energy is free of charge and can be utilized in decentralised manner in almost every part of the world. Development and manufacture of small wind turbines was at the beginning of present expansion of wind energy industry in the world. These small devices were used for a simple application; however, they lost their significance as an electrical energy source for individual homes after their performance grew gradually. Development and research state support in many countries has stimulated advancement of new technologies focused in particular electrical energy production by wind turbines. At present, virtually all major turbines supply electrical energy to a network. It reflects the fact that performance of one horizontal turbine is usually much greater than consumption of one or more households. Moreover, in areas where annual average of wind speed reaches more than 5 m/s building of wind farms, which energy production exceeded consumption of whole villages, started already back in the '80s.

Wind turbine sets are built around the world. They are also an ideal technology for developing countries, where there is a high demand for new production capacities in the energy industry at the moment. An advantage of wind power plants is they can be built and connected to the public grid easily, inexpensively and in a relatively short time comparing to the conventional power plants. Today, developed countries express an interest in wind turbines not only with respect to environment protection, but also for economic reasons. The price of produced electrical energy continues to decrease and in several countries it is comparable to the price of electrical energy produced in conventional power plants. Today, even the most conservative energy specialists prognosticate a great development of wind technologies in near future.

In order to calculate electrical energy produced by a wind turbine it is necessary to recognise several relations. The energy is directly proportional to the rotor surface, the third power of wind speed and to air density.

A rotor of a turbine rotates due to the air pressure on its blades. The more air the faster it revolves and thus more energy is produced. It results from the physical laws that kinetic energy of air is directly proportional to its weight, which means that air energy depends on air density. Density expresses the amount of molecules per unit of air volume. Under normal atmospheric pressure and the temperature of 15° Celsius one m³ of air weighs 1.225 kg. Density increases slightly with increasing humidity, thereby air becoming denser in winter than in summer and therefore energy production is greater in winter than in summer at the same wind speed. However, the air density is the only parameter that cannot be changed in the given conditions.

The rotor (propeller) of the wind turbine "captures" the energy of air falling on it. It is apparent that the larger the rotor surface is the more energy can be produced. Since the surface captured by the rotor increases with the second power of the rotor diameter, the turbine twice the size is capable of producing four times more energy. However, extension of the rotor diameter is not easy, even though it may seem like that at first thought. Increasing propeller diameter results in higher pressure on the whole system at the given wind speed. In order to withstand the pressure use of stronger mechanical components of the turbine is necessary making the whole system more expensive.

The wind speed is the most significant parameter affecting the amount of energy the turbine is able to produce. Increasing intensity of the wind means higher speed of the rotor and thus the higher energy production. The amount of produced energy depends on the third power of the wind speed. Resulting from the above if the wind speed doubles the energy production increases eight times.

Horizontal-axis wind turbines (HAWT) are currently the most common type of wind turbines. The rotation axis is in the direction parallel with the ground. Three-blade rotors that are classified as high-speed types of windmills are the most commonly used.

Wind turbines rotating around the axis perpendicular with respect to ground (VAWT) are the second type. Their major advantage is that they can capture wind from all sides, thus they does not have to be pointed in the wind direction. At present, small vertical axis wind turbines having power of several kW are mainly used.

The resistance type of the vertical axis windmill takes advantage of a different resistance of a convex and a hollow semi-circular blade at air flow. They are also able to use turbulent air flow caused by surface texture. Savonius-type rotor designed in 1924 (US1697574) is the best known rotor of this type. Relatively small efficiency is the major disadvantage of the resistance type.

Vertical axis wind turbines (VAWT) make use of a lifting force on blades. The blades are shaped aerodynamically. The Darrieus-type rotor designed in 1927 (US1835018, US4808074) is the best known vertical axis rotor. According to different blade shapes they are divided to curved blade rotors, such as φ-rotors (US5451137, US6253700) and straight blade rotors - H-rotors (US0099204A1) and Δ-rotors (GB2165003A).

Both resistance and lifting-force types of wind turbines (VAWT) have their advantages and disadvantages, therefore combinations of the two types are primarily used at present. The Darrieus-Savonius type rotor containing each of them in standard design is probably the simplest combination and it is also commercially available in various executions and sizes. Combination of elements from the two types can increase efficiency of the resulting wind turbine (VAWT) and a wider range of utilizable wind speeds. Amendment of poor starting characteristics of the Darrieus-type rotor by adding the Savonius-type rotor is the most significant benefit. A helical Savonius-type rotor belongs to the group of said modification. Higher efficiency, minimal turbulence sensitivity, fast start and utilizability at high wind speeds due to the symmetry of the system are achieved by the helical configuration.

At present there exist many types of combined wind turbines having the rotation axis perpendicular to the ground (VAWT), the following being the most relevant in terms of the present invention: US2007086895A1-2005, WO2006119648 A1-2005, US8148838B2-2010, US2008/0217925-2008, WO2009/067210A1-2007, PCT/CA2008/001446-2007, WO2008/100580.
WO2008/100580 describes a vertical wind driven electricity generation device. The rotor of the device utilizes a segmented Savonius rotor, which is easily operated, transported, assembled and maintained. The rotor blades are segmented into a plurality of modest size blade pair segments, each blade comprising two helically curved blade portions. The blade segments are preferably of the same height and diameter. The rotor is mounted on a central vertical shaft connected to a generator.
US 2010/0104441 A1 discloses a vertical turbine comprising a plurality of fluid capture element layers. The layers are radially offset, thereby providing a spacing between vertically-adjacent fluid capture elements.

KR20130060765A discloses a vertical turbine with a hollow aerodynamically shaped profile ending with a nozzle.

### Summary of the invention

The invention relates to a rotor vertical axis wind turbine according to independent claim 1.

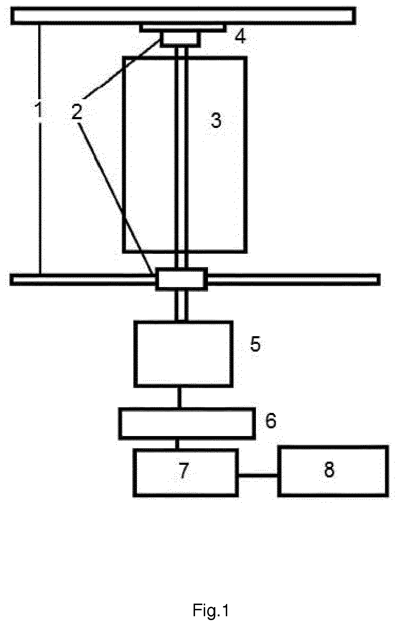

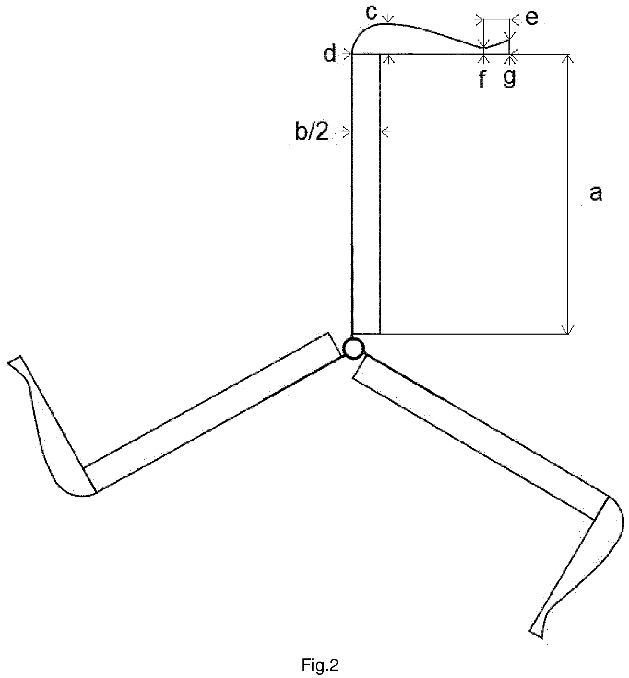

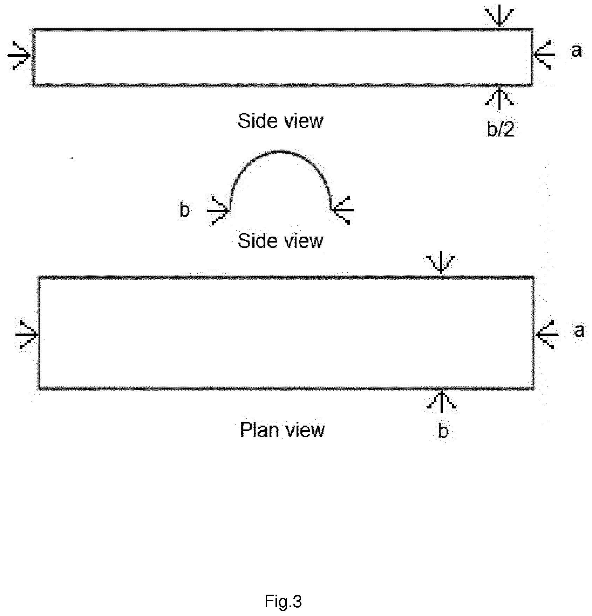

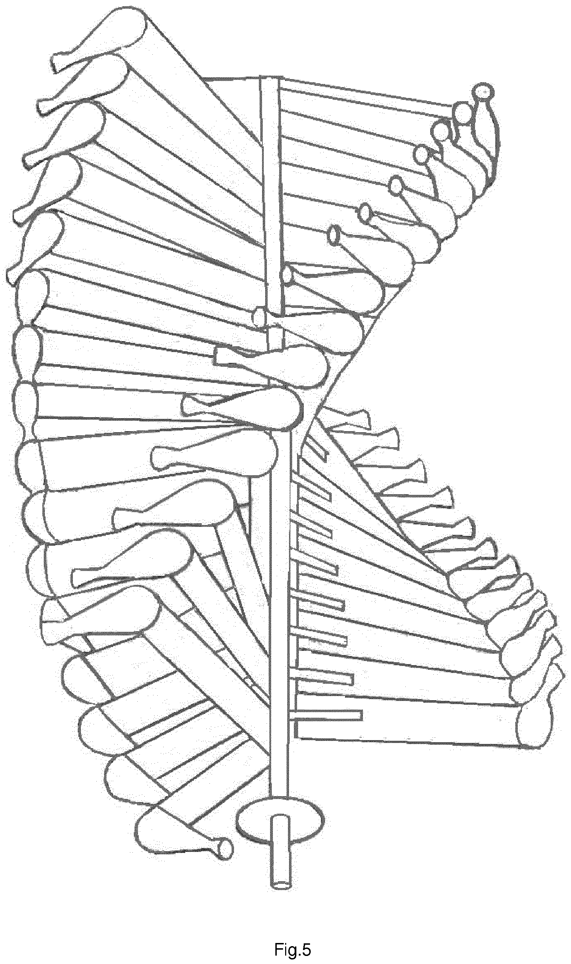

The invention addresses a design and construction of a combined type vertical axis windmill incorporating blades arranged to triplets enclosing mutually an angle of 120°. The blade triplet is positioned in one plane and accounts to one layer in the windmill, Fig. 2.
The individual layers (blade triplets) compose a system, Fig. 1 and Fig. 5, in the vertical axis windmill. Each layer is rotated from a previous one by 8°. The system may contain 16 layers (rotation by 120°, 48 blades), 32 layers (rotation by 240°, 96 blades) and 48 layers (rotation by 360°, 144 blades) or multiples of the numbers of layers and blades.
Each individual blade consists of three functional components. A section closest to the rotation axis is shaped as a hollow semi-cylinder perpendicular to the rotation axis and represents a resistance portion of the blade, Fig. 3. At the point of attachment to the rotation axis the hollow semi-cylinder is closed in order to prevent escape of air mass to the area around the rotation axis. If the resistance part is compared to the standard form of the Savonius type rotor, the windmill according to the present invention is rotated by 90° in comparison with the Savonius type rotor. Likewise, in the axis area it does not let the fluid leave, as in the case of the Savonius type rotor, because the semi-cylinder is closed at the axis. The fluid is lead from the rotation axis towards the outer edges of the blades so that it is able to enter other blade segments.

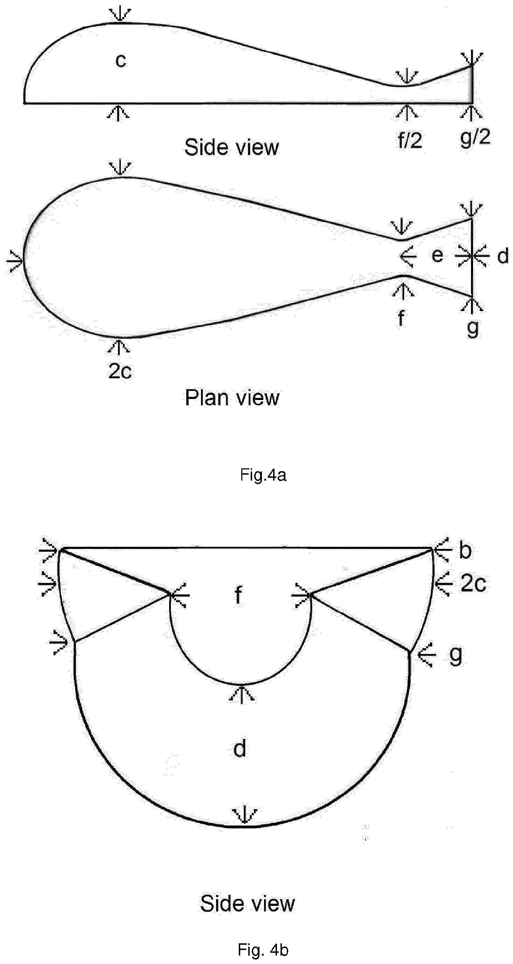

A part containing an aerodynamic profile from the outer side follows perpendicularly to the resistance portion of the blade, though the profile is hollow from the inner side. Said part fulfils lifting function of the rotor implemented in each individual blade. When designing the lifting portion a modified (thicker) type of the Wortmann profile FX67-K-120 was used. The profile is not planar as it is the case in aircrafts, it is rotationally symmetrical (3D layout). It was made by rotating the profile by 180°, Fig.4a, detail Fig.4b. A positive and a negative mould used at a lamination process of the respective parts was made for executing the hollow profile.

In order to prevent tearing-off of the boundary layer at the end of the profile on one side and enable the air mass to leave on the other side we ended the profile with a suitably designed nozzle having a "jet" function as used in reaction engines. The gas leaving the resistance part enters the hollow lifting part and finally exits through the nozzle type segment. As far as a structure is concerned, however, the nozzle is only a semi-nozzle, as it is not closed. In addition to the described effects the function of the nozzle is to increase the air mass discharge speed and thereby also the rotational speed of the turbine that is generally a slowly spinning type of the rotor due to the weight and relatively high number of blades. The nozzle is mounted at the point representing 15% of the total profile length in the direction from the end of the lift segment. In terms of the surfaces, if the sections in the widest and narrowest points are compared, the mutual ratio of the surfaces is 9:1. As a result, there is an increase in the flow speed in the narrowest point of the nozzle and consequently the increase in the rotational speed of the turbine and thereby in its output.

The turbine according to the present invention is ideally laterally symmetrical and therefore it is capable of using wind from all sides, including the turbulent wind. As a result of slow spinning the arrangement of the blades into the described shape is characterised by a low starting speed below the value of 2 m/s.

In addition to the properties described above, the large moment of inertia enabling effective use of separate wind gusts is a positive feature of the rotor according to the present invention. The wind gust spins the turbine and that remains rotating for a relatively long period of time. Concurrence of separate gusts often occurs resulting in rotation of the turbine also in periods of windless conditions. It makes the combination effect of the windmill and the electrical energy storage.

### A brief description of the drawings

On the enclosed drawings Fig. 1 is an overall view of a system with a windmill, Fig. 2 illustrates an arrangement of blade triplets in one plane representing one layer in the rotor. Fig. 3 is the views of a resistance portion of the windmill, Fig. 4a is a lift portion of the blade in detail on Fig. 4b and Fig. 5 illustrates a windmill rotor itself as one unit.

### Examples

The individual layers (blade triplets) form a system in the vertical axis rotor. Each layer is rotated from the previous one by 8°. The system of blades arranged in layers may contain 16 layers (rotation by 120°, 48 blades), 32 layers (rotation by 240°, 96 blades) and 48 layers (rotation by 360°, 144 blades) or multiples of the numbers of layers and blades.

Fig. 1 is the overall view on the electrical energy generation device, wherein a vertically arranged shaft of rotor 3 is positioned in bearings 2 of bearing structure 1, bearings 2 are secured in. Further on, the device contains brake 4, voltage generator 5, charge controller 6, batteries 7 and in some cases load 8. A method of electrolytic production of hydrogen as an energy carrier is an alternative to batteries as the electrical energy storage.

Fig. 2 is the top view of one rotor layer that contains three blades arranged on the shaft, wherein the blades enclose with one another an angle of 120°. Each blade consists of a resistance portion of length a, lift ending of total length d. The blade resistance portion is formed by a hollow profile representing a half of a surface area of the cylinder having one base of a semi-annular shape, wherein said closed part is positioned on the side of the shaft, the blade is secured on. The opposite, outer side of the blade is provided with the lift ending formed as a hollow aerodynamically shaped component from the outer side provided at the end distant from the blade resistance portion with a narrowing in the form of a nozzle, which is in fact a semi nozzle as the lift ending is open from the inner part and is formed as a longitudinal half of the rotationally symmetric profile. The ratio of the blade resistance portion length a to the lift ending total length d is 7:3.8. The ratio of the blade resistance portion length a to its diameter b is 1:0.2. The ratio of the diameter in the narrowest and widest part of the lift ending is 1:4, the ratio of the nozzle narrowest point and the nozzle widest point is 1:2 and the ratio of the total length of the lift ending to the nozzle length is 7.8:1.2.

The individual layers (blade triplets) form a system in the vertical windmill as such. Each layer is rotated from the previous one by 8°. The system may contain 16 layers (rotation by 120°, 48 blades), 32 layers (rotation by 240°, 96 blades) and 48 layers (rotation by 360°, 144 blades) or multiples of the numbers of layers and blades.

Fig. 2 Blade triplets in one plane forming one layer in the windmill
- **a** Blade resistance portion length
- **b** Blade resistance portion diameter
- **c** Ending profile highest point
- **d** Lift ending total length
- **e** Nozzle lift ending length
- **f** Nozzle narrowest point radius
- **g** Nozzle widest point radius (gas output)

Fig. 3 Windmill resistance portion
- **a** Blade resistance portion length
- **b** Blade resistance portion diameter

Fig. 4 Details of windmill lift portion
- **b** Blade resistance portion diameter
- **c** Ending profile highest point
- **d** Lift ending total length
- **e** Nozzle lift ending length
- **f** Nozzle narrowest point radius
- **g** Nozzle widest point radius (gas output)

Fig. 5 Overall view of the windmill rotor formed from the components described above on Figs. 2-4 composed in the 16 layer version.

Measured characteristics of the 16 layers windmill prototype:
- Voltage generating windmill starting speed is 1.9 m/s.
- Speed it stops generating voltage at when decelerating is 1.6 m/s.
- Windmill tip speed ratio is 0.369 ± 0.096.
- Windmill gravity centre is at the distance of 200 mm from the axis at the windmill radius of 850 mm, thus at 23.5% of the windmill radius.
- Windmill prototype moment of inertia is 5.23 kg.m²
- Sum of real surfaces including the ending at the prototype is 12.2 m²
- Sum of planar surfaces including the ending is 7.26 m²
- Sum of active surfaces engaged by rotation 1.334 m²
- Swept area according to a flat surface 4.67 m²

| **Dimension** | **Prototype dimensions (16 layers) in mm** | **Usable dimensions interval in mm** |
|---|---|---|
| **a** | 750 | 750-15000 |
| Blade resistance portion length | | |
| **b** | 150 | 150-3000 |
| Blade resistance portion diameter | | |
| **c** | 80 | 80-1600 |
| Ending profile highest point | | |
| **d** | 375 | 375-7500 |
| Lift ending total length | | |
| **e** | 60 | 60-1200 |
| Nozzle lift ending length | | |
| **f** | 20 | 20-400 |
| Nozzle narrowest point radius | | |
| **g** | 40 | 40-800 |
| Nozzle widest point radius (gas output) | | |

### Industrial application

An electric energy generation device having the rotor according to the present invention can be utilized as follows:
A separate electrical energy source for a family house in a countryside situated outside a building structure or part thereof, executed as a grid-tied system (connected to a local electrical grid) or off-the-grid (an individual electrical energy source not connected to an electrical grid).

A separate electrical energy source (or part of a system of such sources) for a multistorey building in a countryside or in a city, where the rotors are situated as part of a building structure (e.g. on a roof) or on a separate plot and they are executed as a grid-tied system (attached to the electricity grid) or off-the-grid (individual source not connected to the electricity grid), wherein they may provide electrical energy for a plurality of connected buildings.

A separate electrical energy source for public street lighting, where the rotor may either be part of a street lamppost or may not be a part of the light pole and it is executed as a grid-tied (connected to the electricity grid) or an off-grid system (individual source not connected to the electricity grid).

A separate electrical energy source for the purpose of motorways and expressways, where the rotor is positioned along the median of two driving directions and due to a relatively small height it is capable of utilizing the secondary air flow created by automobile ride, wherein it is situated as a free-standing facility and is executed as a grid-tied (connected to the electricity grid) or an off-grid system (individual source not connected to the electricity grid).

A separate electrical energy source for the devices such as transceivers, relay stations, polar and other research stations and other similar facilities, where the windmill is situated either out of or as part of a structure and it is executed as a grid-tied (connected to the electricity grid) or an off-grid system (individual source not connected to the electricity grid).

A separate electrical energy source utilizable on ships in numbers necessary to replace diesel aggregates, where the windmill is executed as an off-grid system (individual source not connected to the electricity grid).

A separate electrical energy source (or part of a system of such sources) for application in agriculture carried out on agricultural land. The generated electrical energy may be utilized for illuminating greenhouses, aerating breeding facilities, air-conditioning stables and barns and the like, where the windmills may be executed as a grid-tied system (connected to the electricity grid) or off-the-grid (individual source not connected to the electricity grid).

## Claims

1. A rotor vertical axis wind turbine for electrical energy generation comprising:
- a bearing structure (1) comprising a rotor (3) positioned in bearings (2),
- a brake (4),
- a voltage generator (5),
- a charge controller (6) and
- a battery (7), wherein
- the rotor (3) consists of a vertically arranged shaft provided with at least three blades arranged in at least one plane perpendicular to the shaft, wherein the blades of one plane mutually enclose an angle of 120° and where the blades arranged in the plane perpendicular to the shaft form a layer, wherein the blades of each other layer are shifted by an angle of 6 to 10° from the blades of the previous layer, so that the blade system forms a triple spiral,
each blade consists of a hollow U-shaped profile that is closed at the end connected to the shaft and forms a resistance portion of the blade, **characterized in that**, each blade is provided at the outer end with a lift ending formed by a hollow aerodynamically shaped profile ended with a narrowing in the form of a nozzle, wherein said hollow aerodynamically shaped profile with a nozzle is a longitudinal half of a rotationally symmetric profile with a nozzle.

2. A wind turbine according to claim 1, **characterized in that** it contains at least 16 layers of blade triplets and multiples of this number.

3. A wind turbine according to claim 1, **characterized in that** it contains at least 32 layers of blade triplets and multiples of this number.

4. A wind turbine according to claim 1, **characterized in that** it contains 48 layers of blades and multiples of this number of blade layers.

5. A wind turbine according to claim 1, **characterized in that** the resistance portion of the blade is formed as a half of a cylinder surface, provided at the end at the shaft with a half of a base and a ratio of a blade length and diameter is 1:3 to 1:6.

6. A wind turbine according to claim 1, **characterized in that** the ratio of the blade resistance portion length to the length of the blade lift part with a hollow nozzle-ended aerodynamic part is 1:0.6 to 0.3.

7. A wind turbine according to claim 1, **characterized in that** the hollow lift ending of the aerodynamic profile and with the nozzle is attached perpendicularly to the blade in the blade plane and closes the outer end of the blade body.

8. A wind turbine according to claim 6, **characterized in that** the inner diameter of the hollow lift ending corresponds to the outer diameter of the blade resistance portion and the ratio of the diameter f of the narrowest nozzle part to the diameter 2c of the widest part of the hollow lift ending is 1:2 to 5 and the ratio of the nozzle length to the total lift ending length is 1:3 to 7 and the ratio of the narrowest nozzle point to the widest nozzle point is 1:1.5 to 4.

## Patentansprüche

1. Rotor-Vertikalachsen-Windturbine zur Erzeugung elektrischer Energie, umfassende:
- eine Tragstruktur (1), bestehende aus einem Rotor (3), der in Lagern (2) platziert ist,
- eine Bremse (4),
- einen Spannungsgenerator (5),
- einen Laderegler (6) und
- eine Batterie (7), wobei
- der Rotor (3) aus einer vertikal angeordneten Welle besteht, die mit mindestens drei Blättern versehen ist, die in mindestens einer zur Welle senkrechten Ebene angeordnet sind, wobei die Blätter einer Ebene einen Winkel von 120° gegenseitig einschließen und die Blätter in der zur Welle senkrechten Ebene eine Schicht bilden, wobei die Blätter der jeweils anderen Schicht um einen Winkel von 6 bis 10° gegenüber den Blättern der vorhergehenden Schicht verschoben sind, so dass das Blattsystem eine Dreifachspirale bildet, wobei jedes Blatt aus einem hohlen U-förmigem Profil besteht, das an dem mit der Welle verbundenen Ende geschlossen ist und einen Widerstandsabschnitt des Blatts bildet, **dadurch gekennzeichnet, dass** jedes Blatt am äußeren Ende mit einem Hubende versehen ist, das durch ein hohles, aerodynamisch geformtes Profil gebildet wird, das mit einer Verengung in der Form einer Düse endet, wobei das genannte hohle aerodynamisch geformte Profil mit einer Düse eine Längshälfte eines rotationssymmetrischen Profils mit einer Düse ist.

2. Eine Windturbine nach Anspruch 1, **dadurch gekennzeichnet, dass** sie mindestens 16 Schichten von Blattdreiern und Vielfache dieser Anzahl enthält.

3. Eine Windturbine nach Anspruch 1, **dadurch gekennzeichnet, dass** sie mindestens 32 Schichten von Blattdreiern und Vielfache dieser Anzahl enthält.

4. Eine Windturbine nach Anspruch 1, **dadurch gekennzeichnet, dass** sie 48 Schichten von Blättern und Vielfache dieser Anzahl der Blattschichten enthält.

5. Eine Windturbine nach Anspruch 1, **dadurch gekennzeichnet, dass** der Blattwiderstandsabschnitt als die Hälfte einer Zylinderfläche ausgebildet ist, die am Ende an der Welle mit einer Hälfte einer Basis versehen ist und das Verhältnis der Blattlänge und des Durchmessers 1:3 to 1:6 ist.

6. Eine Windturbine nach Anspruch 1, **dadurch gekennzeichnet, dass** das Verhältnis der Länge des Blattwiderstandsabschnitts zur Länge des Blatthubteils mit einer Hohldüse endenden aerodynamischen Teil 1:0,6 bis 0,3 ist.

7. Eine Windturbine nach Anspruch 1, **dadurch gekennzeichnet, dass** das hohle Hubende des aerodynamischen Profils und mit der Düse senkrecht zum Blatt in der Blattebene befestigt ist und das äußere Ende des Blattkörpers verschließt.

8. Eine Windturbine nach Anspruch 6, **dadurch gekennzeichnet, dass** der Innendurchmesser des hohlen Hubendes dem Außendurchmesser des Blattwiderstandsabschnitts entspricht und das Verhältnis des Durchmessers des engsten Düsenteils zum Durchmesser 2c des breitesten Teils des hohlen Hubende 1:2 bis 5 ist und das Verhältnis der Düsenlänge zur gesamten lift Hubendelänge 1:3 bis 7 ist und das Verhältnis des engsten Düsenpunktes zum breitesten Düsenpunkt 1:1,5 bis 4 ist.

## Revendications

1. Éolienne avec axe de rotor vertical pour la production d'énergie électrique, y compris:
- une structure porteuse (1) avec un rotor (3) dans les paliers (2),
- un frein (4),
- un générateur de tension (5),
- un régulateur de charge (6) et
- une batterie (7), où
- le rotor (3) est formé par un arbre disposé verticalement doté d'au moins trois lames disposées dans au moins un plan perpendiculaire à l'arbre, où les lames d'un seul arbre enferment réciproquement un angle de 120° et où les lames dans le plan perpendiculaire à l'arbre forment une couche, où les lames d'une couche sur deux sont décalées à travers un angle de 6 à 10° par les lames de la couche précédente, de sorte que le système des lames forme une spirale triple,
chaque lame est formée par un profil creux à U qui est fermé dans son extrémité connecté à l'arbre, en formant une portion de résistance de la lame, **caractérisée par le fait que** chaque lame est dotée (à l'extrémité extérieure) d'un arrêt formé par un profil creux aérodynamique terminant avec un rétrécissement en forme de buse, où ledit profil creux aérodynamique avec une buse est une partie longitudinale d'un profil rotativement symétrique avec une buse.

2. Une éolienne selon la demande 1, **caractérisée par le fait qu'**elle contient au moins 16 couches de triplets de lames et multiples de ce nombre.

3. Une éolienne selon la demande 1, **caractérisée par le fait qu'**elle contient au moins 32 couches de triplets de lames et multiples de ce nombre.

4. Une éolienne selon la demande 1, **caractérisée par le fait qu'**elle contient au moins 48 couches de triplets de lames et multiples de ce nombre de couches de lames.

5. Une éolienne selon la demande 1, **caractérisée par le fait que** la portion de résistance de la lame a la forme d'une moitié de surface cylindrique qui, dans la partie terminale de l'arbre, est équipée d'une moitié de la base ; et le rapport entre la longueur et le diamètre est de 1 : 3 à 1 : 6.

6. Une éolienne selon la demande 1, **caractérisée par le fait que** le rapport entre la longueur de la portion de résistance de la lame et la longueur de la partie montante de la lame (avec la partie aérodynamique creuse avec une buse à l'extrémité) est de 1 : 0,6 à 0,3.

7. Une éolienne selon la demande 1, **caractérisée par le fait que** la terminaison creuse du profil aérodynamique avec buse est perpendiculairement attachée à la lame dans la partie platte da la lame et elle ferme l'extrémité extérieure du corps de la lame.

8. Une éolienne selon la demande 1, **caractérisée par le fait que** le diamètre interne de la terminaison montante creuse correspond au diamètre externe de la portion de résistance de la lame et le rapport entre le diamètre « f » de la partie la plus étroite de la buse et le diamètre « 2c » de la partie la plus large de la terminaison montante creuse est de 1 : 2 à 5 ; et le rapport entre longueur de la buse et la longueur totale de la terminaison montante est de 1 : 3 à 7 ; et le rapport entre le point le plus étroit de la buse et le point le plus large de la buse est de 1 : 1,5 à 4.
